(19) Europäisches Patentamt

European Patent Office

Office européen des brevets

(11) **EP 1 059 510 A1**

(12) **EUROPEAN PATENT APPLICATION**

(43) Date of publication:
**13.12.2000 Bulletin 2000/50**

(51) Int Cl.⁷: **G01C 21/20**

(21) Application number: **99401446.2**

(22) Date of filing: **10.06.1999**

| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicants:<br>• **TEXAS INSTRUMENTS INCORPORATED**<br>  **Dallas, Texas 75243 (US)**<br>  Designated Contracting States:<br>  **AT BE CH CY DE DK ES FI FR GB GR IE IT LI LU MC NL PT SE**<br>• **TEXAS INSTRUMENTS FRANCE**<br>  **06271 Villeneuve Loubet Cédex (FR)**<br>  Designated Contracting States:<br>  **FR** | (72) Inventor: **The designation of the inventor has not yet been filed**<br><br>(74) Representative: **Potter, Julian Mark**<br>  **D. Young & Co.,**<br>  **21 New Fetter Lane**<br>  **London EC4A 1DA (GB)** |

(54) **Wireless location**

(57)    Apparatus is provided for determining the location of an object in a co-ordinate system. The apparatus comprises means for determining a location of the apparatus in the co-ordinate system. The apparatus further comprises means for determining the relative position of an object with respect to said apparatus, and means for calculating the location of the object in the co-ordinate system from a knowledge of the position of the object relative to the apparatus.

Fig. 1

**Description**

The present invention relates to apparatus and method of operation therefor, for determining the location of a remote object. In particular, but not exclusively, preferred embodiments of the invention operably link information regarding the location of the remote object to a database comprising information about an object or objects positioned at that location.

It is a common problem for visitors to an area such as a city or a town to identify landmarks and find out places of interest quickly and easily. Conventionally, information about such places is by way of guidebooks, brochures and maps provided by tourist authorities, for example. However, it is often necessary to carry many of such guidebooks and brochures in order to have sufficient information about the places of interest in the town or city one is visiting. It is not easy to find out information about a particular landmark that one may come across from the multitude of guidebooks, etc that one would have to carry about one's person. An alternative is to review the guidebooks to identify landmarks and places of interest which you wish to view, and then to make a point of going there. However, this mitigates against what many visitors wish to do, which is to stroll through a city and view landmarks, etc as they happen upon them.

Another drawback with conventional tourist information is that the information may be out of date, particularly if the information is about admission prices, opening times or a concert or show. Preferably, a visitor would like to be able to obtain up-to-date information without having to go right up to the place of interest and enquire.

Visitors often have difficulty with public transport, particularly if they do not speak the language of the country which they are visiting. Typically, all a visitor needs to know is the route of a particular bus, for example. At present, the visitor would have to consult a bus timetable, which would typically be in a foreign language, or ask a native of the city which they are visiting. This may not always be convenient or possible.

According to a first aspect of the present invention, there is provided apparatus for determining the location of an object, typically remote from the apparatus. The apparatus comprises means for determining a location of the apparatus and means for determining the relative position of an object remote from said apparatus with respect to the apparatus. There is further provided means for calculating the location of the object from knowledge of the relative position of the object to the apparatus.

Preferably, the apparatus is adapted to determine the location of the object within a suitable co-ordinate system, such as latitude and longitude or map grid reference system such as used by the Ordinance Survey. Throughout the specification, the term "co-ordinate system" shall be used to refer to any suitable system capable of defining a position within a geographic area. Optionally, the co-ordinate system may provide three-dimensional position definition, not just positional location in a two-dimensional domain.

According to a second aspect of the present invention, there is provided a method for determining the location of an object. The method comprises firstly defining a reference point, and then determining the range of the object and bearing of the object relative to the reference point. The method further comprises calculating the location of the object from a knowledge of the reference point location, the range and the bearing.

Embodiments in accordance with the first and second aspects of the invention advantageously provide the location of an object disposed remote from the apparatus. Preferably, the location of the object is determined or defined with reference to a co-ordinate system.

Preferably, the co-ordinate system is a substantially Cartesian co-ordinate system. Such a system is a convenient system and may include a latitude and longitude co-ordinate system or a map grid reference system, for example.

In a preferred embodiment, the means for determining the relative position of an object includes a range finding means for determining the distance of the object from the apparatus, and bearing means for determining a bearing of the object relative to the apparatus. Further included are position calculation means for determining the relative position of the object to the apparatus in accordance with the distance and bearing as determined by the range finding and bearing means.

The position calculation means is further operable for determining the location of the object from a knowledge of the location of the apparatus and the relative position of the object, thereby establishing an absolute position for the object, suitably defined within a co-ordinate system.

Suitably, the position calculating means comprises a microprocessor which is configurable to determine the location of the object in accordance with the relationship $X=x+r\cos\alpha$, $Y=y+r\sin\alpha$, where $X$ and $Y$ represent the co-ordinates of the object, $x$ and $y$ represent the co-ordinates of the apparatus, $r$ represents the distance determined by the range finding means and $\alpha$ represents an azimuthal bearing determined by the bearing means. The foregoing relationship is particularly suitable where the co-ordinate system is a map grid reference system and may also be applied to the latitude and longitude system which may be considered to be a substantially planar system over at least distances within the visible horizon.

A particularly advantageous means for determining the location of the apparatus comprises a wireless receiver which receives one or more signals from which may be derived the location of the apparatus. A particularly suitable wireless system is the GPS system, and at least one of the signals comprises a GPS signal.

Optionally, the wireless receiver may be for a wireless/cellular telephone system, and the location of the apparatus derived from triangulation of wireless/cellular base stations.

Advantageously, the range finding means comprises an optical system having light transmitting means, light receiving means and means for determining the time of flight of a transmitted light beam reflected from the object and received in the light receiving means. Typically, the light transmitting means is adapted to transmit a pulse of light, and the time of flight evaluation means is operable to determine the time of flight for the pulse transmitted to and reflected from the object and received by the range finding means. Typically, the light will comprise laser light.

Optionally, the range finding means may comprise a range finding system for an autofocus camera. Advantageously, the range finding means is integral with the autofocus camera, such camera being either a still camera or video camera.

It should be noted that the term "light" used hereinabove and hereinafter, encompasses light outside the visible range, for example infrared and ultraviolet light.

Utilisation of the range finding system for an autofocus camera is a particularly advantageous embodiment of the invention, since such systems are readily available. Furthermore, the apparatus may be formed integrally with the autofocus camera, thereby providing enhanced functionality for the camera, and also utilising the sighting means, i.e. viewfinder, and control circuitry of the camera for operating the apparatus.

Preferably, the bearing means comprises an electronic compass which provides at least an azimuthal bearing, but optionally may also provide an elevational bearing relative to a reference surface, typically the earth's surface.

The option of an elevational bearing would be particularly useful in an area having a high density of objects of interest but at different height levels, since the elevational bearing information will assist in distinguishing respective objects of interest from each other.

In accordance with a third aspect of the invention, there is provided a system for obtaining information associated with an object, the system comprising apparatus in accordance with any of the foregoing paragraphs describing aspects of the invention. The system further comprises storage means which stores information identifying a location, and also information corresponding to the location and/or its environs and/or objects at or close to that location in the coordinate system.

A fourth aspect in accordance with the invention, provides a method operable to determine the location of an object, and further to compare the location with one or more locations stored in a memory. The method is operable to retrieve from the memory information associated with an object disposed at or proximal to that location.

Thus, it is possible for a user of the system to identify a remote object of interest, determine the location of that object utilising the apparatus and receive information corresponding to that object provided to it via the system. Such a system obviates the need for guidebooks, brochures, timetables or other sorts of information regarding an environment. Further information may also be provided, such as relating to objects close to the particular object of interest or adverts for services, e.g. by restaurants. Multiple storage means may be provided each for a different language so that a user could specify the language in which they wish to receive information.

Typically, the system comprises display means for displaying information associated with a stored location in the storage means and corresponding to a location calculated for the object. The system may also comprise speech or voice interface means instead of or to augment the display means.

Preferably, the storage means is integral with the apparatus, and comprises a semiconductor memory or a magnetic media memory or optical media memory. A particularly useful embodiment of a semiconductor memory is a flash memory module.

Such local memories may be replaceable or interchangeable in the form of a cartridge, such that a particular storage device may be hired or purchased for a particular city or area. Thus, the apparatus and system itself need not be dedicated to a particular area but may be universal apparatus. Additionally, cartridges may be provided for different languages.

Optionally, the system comprises wireless communication means and the storage means is disposed remote from the apparatus and linkable to the apparatus via a wireless communications channel.

The wireless communication means may be used to communicate the location of the object to a remote storage means, and to receive information corresponding to the location and/or object(s) at or proximal to that location.

A display may be integrally formed with the apparatus, in particular if the apparatus is integrally formed with an autofocus camera, for example, the display may form part of the display means of the camera. Suitably, the display would be a liquid crystal display.

Optionally, the system comprises a computer means which is linkable to the apparatus, the computer means comprising a display screen for displaying information. Further, the information stored in the memory may comprise a Uniform Resource Locator (URL), and the computer can be configurable to access an Internet site corresponding to the URL corresponding to a determined location of the object.

The system may comprise a cellular telephone, the cellular transceiver of which may be advantageously utilised as a wireless communication device for the apparatus. Suitably, the cellular telephone and apparatus are integrally formed.

The system may also comprise eyeglasses or a visor wearable by a user and wherein the range finding means is integrally formed with the eyeglasses or visor and adapted to determine a range in the same direction as a viewing direction of a user of the eyeglasses or visor. Preferably, a miniature display, for example an LCD, is disposed in an eyepiece of the eyeglasses or visor.

Preferred embodiments in accordance with aspects of the present invention will now be described, by way of example only, with reference to the following drawings, in which:

Figure 1 is a schematic illustration of a typical city environment comprising various landmarks;

Figure 2 is a diagrammatic illustration of the layout of the main components of a position locating apparatus in accordance with a first embodiment of the invention;

Figure 3(a) schematically illustrates a wireless link to a remote database in accordance with an aspect of the invention;

Figure 3(b) illustrates an example of a table suitable for an embodiment in accordance with the invention;

Figure 4(a) is a schematic illustration of a device in accordance with the first embodiment of the invention;

Figure 4(b) is a schematic illustration of a device coupled to a computer in accordance with the first embodiment of the invention;

Figure 5 schematically illustrates information for determining the location of a distant object in accordance with an embodiment of the invention;

Figure 6 illustrates a flow chart for a process for determining the location of a distant object in accordance with an embodiment of the invention;

Figure 7 is a schematic illustration of apparatus integrally combined with a camera in accordance with a second embodiment of the invention; and

Figure 8 is a schematic illustration of apparatus integrally combined with a cellular telephone in accordance with an embodiment of the invention.

Figure 9 is a block diagram of components for the second embodiment; and

Figure 10 is a schematic illustration of an embodiment of the invention integrally formed with eyeglasses.

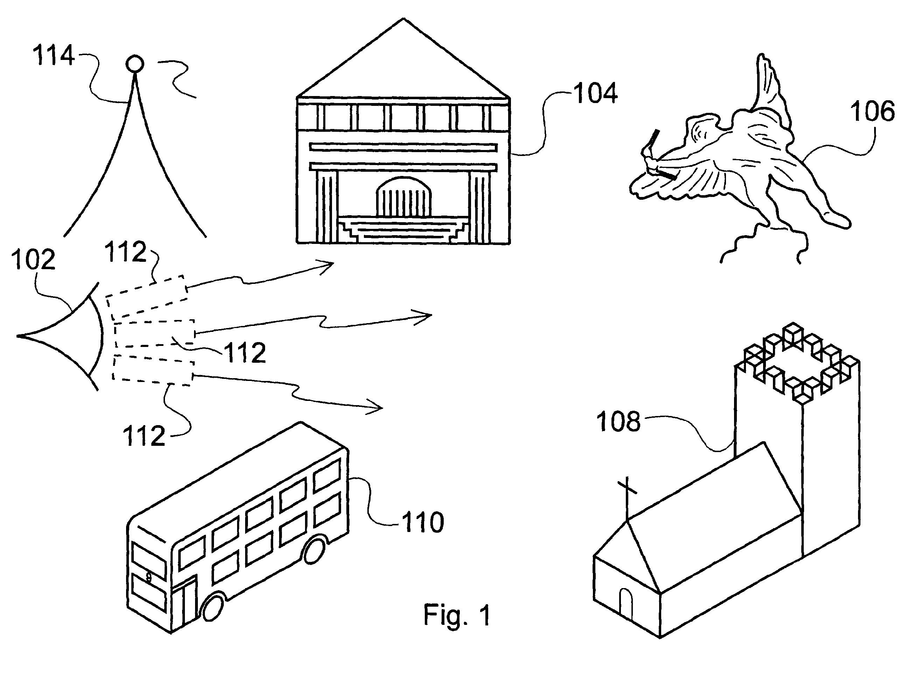

Figure 1 illustrates a typical scheme confronting a visitor or tourist 102 in a city or town. The visitor can see a number of landmarks, such as a building 104, statue 106 and church 108, about which they may have little or no information. Additionally, public transport, such as a bus 110, can also be seen by the visitor. However, it is likely that the only information which the visitor can obtain from the bus is the fact that it is a No 9 bus. Its route and fares, for example, are unknown and would have to be derived from a suitable timetable.

In accordance with an embodiment of the invention, the visitor 102 may point an electronic device 112 at a remote object of interest to the visitor, such as building 104, statue 106, church 108 or bus 110, and receive information regarding that object. Preferably, the device 112 is provided with sights such that the device may be held to the user's 102 eye and aimed towards the object of interest. In general principle, the device 112 locates its own position within a suitable co-ordinate system, and also determines the range and bearing of the object of interest relative to the device 112. The position of the device 112 may be determined to be a longitude and latitude or a map grid reference, such as the Ordinance Survey (OS) grid reference, by a suitable system such as the Global Positioning System (GPS). The examples hereinafter will be described with reference to a grid reference which may be for any suitable co-ordinate system. With a knowledge of the position of the device 112, and the range and bearing relative to the device 112 of the object of interest, it is possible to determine the position of that object within the co-ordinate system. The position of the object may then be communicated to a suitable database, for example stored on a memory chip within the device 112 or stored remotely and accessed via a cellular radio system, for example. The position of the object is then compared with data stored on the database to find a correlating entry. The database includes position or location information and information about the object at that position or location. For a correlating entry the information about the object can then be forwarded to the device 112 where it may be displayed.

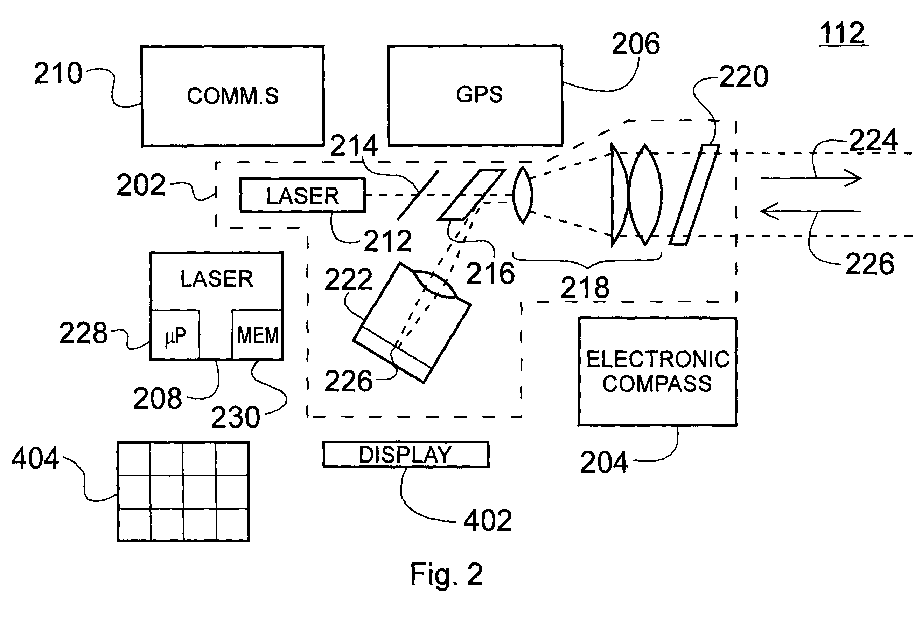

A first embodiment of the device 112 will now be described with reference to Figure 2. The major components of device 112 are a range finder 202 including an optical transceiver, an electronic compass 204, a GPS unit 206, control circuitry 208 and communications unit 210. The optical transceiver system of range finder 202 comprises a laser 212, a polariser 214, a beam splitter 216, a telescope 218 and a quarter-wave plate 220, all aligned on the same optical axis. Additionally, the optical transceiver system 202 includes an optical receiver 222, including a detector 226.

Laser 212 may be any suitable laser such as a Nd:YAG or Nd:YLF optically pumped laser. The light generated by the laser may be utilised directly, or may be input to a wavelength converter, suitably to convert the light to a wavelength which would not cause damage to eyes. The laser output beam is incident on the polariser 214, for example a Brewster plate, and is linearly polarised in a p-polarisation direction, for example. The p-polarised beam passes through beam splitter 216 and into telescope 218 where it is expanded. The expanded beam passes through quarter-wave plate 220 where it is circularly polarised and emitted as circularly polarised light beam 224.

Light beam 224 is directed towards, impinges on, and is reflected from a distant object of interest, such as one of the landmarks referred to in the description of Figure 1. The reflected beam 226 enters the quarter-wave plate 220 where it is linearly polarised into the s-polarisation direction, which is in a direction perpendicular to the p-polarisation direction for a light beam emitted from polariser 214. The s-polarised beam passes through telescope 218 and is incident upon beam splitter 216. The returned s-polarised beam is reflected from beam splitter 216 towards a receiver unit 222, where it is focused onto the detector 226, such as an avalanche photodiode. Receiver 222 and control electronics 208 convert the signals produced by detector 226 to an electronic signal representative of the distance of the object from the device 112.

In operation, the range finding system 202 is controlled by control electronics 208, which suitably comprise a microprocessor 228. The control electronics 208 are configured to operate the laser 212 to produce a stream of pulses having a predetermined pulse width and repetition rate. The beam of laser pulses is directed to and reflected from the distant object and returned by the optical system to receiver 222, and on to detector 226. The control electronics 208 compute the range of the object from a knowledge of the speed of light and the time of flight of the reflected pulses. Suitably, the distance from the device 112 to the object is computed by the microprocessor 228 associated with the control electronics 208 using the formula

$$Tc = 2D,$$

where c is the speed of light, T is the time interval between pulses arriving at detector 226 and D is the distance of the object from device 112. The computed distance may be stored in a memory device 230 associated with control electronics 208, for further processing by the microprocessor 228.

Device 112 also comprises an electronic compass 204 which outputs digital signals representing a bearing, and an optional elevation, relative to a reference. Suitably, the bearing is relative to North for the OS grid reference system for example, and the elevation is relative to the earth's surface. The electronic compass 204 comprises various sensors to measure the earth's magnetic field and gravity vectors and typically comprises its own microprocessor and memory for evaluating a bearing and elevation measurement based on the sensor outputs utilising its own data analysis software. Bearing and elevation measurements in digital signal format are output from the digital compass 204 and transmitted to the control circuitry 208 for further processing by microprocessor 228.

A further unit comprising device 112 is GPS receiver 206. The GPS system comprises a constellation of satellites for transmitting coded signals for reception by GPS receivers, and which may be decoded to determine the position of the GPS receiver. Typically, signals from four different satellites are needed to determine the position of the GPS receiver. Preferably, the GPS receiver 206 comprises a digital map, and outputs a digital signal representing a grid reference on the digital map for the GPS receiver 206. Typically, the accuracy of the positioning for the GPS receiver 206 is between a few and tens of metres, although with a differential GPS system an accuracy of better than 1 metre may be obtained. The digital signal representing a grid reference is sent from the GPS receiver 206 to control circuitry 208 for further processing by the microprocessor 228.

The signals output from the optical transceiver 202, electronic compass 204 and GPS receiver 206 may be utilised by microprocessor 228 to determine a grid reference for the distant object from which the laser beam is reflected.

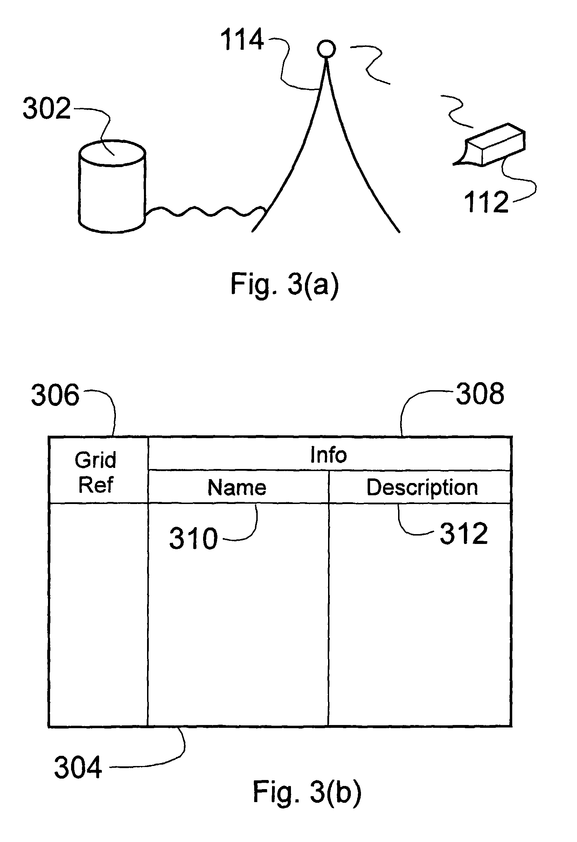

In the example illustrated in Figure 2, the grid reference of the distant object evaluated by microprocessor 228 is forwarded to a communications unit 210. Suitably, the communications unit 210 comprises a cellular radio telephone transceiver unit. The control circuitry 208 may be configured to control the communications unit 210 to set up a communication channel over the cellular network in order to communicate with a database 302, as illustrated in Figure 3A. The grid reference of the distant object is then forwarded to the remote database over the communications channel.

In an exemplary embodiment as illustrated in Figure 3B, the database 302 comprises a table 304, having at least two columns 306 and 308. The first column, 306, is a grid reference column, and the second column, 308, is an information column comprising information about an object or objects of interest corresponding to the grid reference on the associated row in column 306. Other suitable configurations for the database may also be utilised. The grid reference communicated to the database 302 is compared with the entries in the grid reference column 306, and if a "hit" occurs, the corresponding information in column 308 is extracted and communicated to device 112, where it may be displayed on display 402. The information in column 308 may be a brief description of the distant object corresponding to the grid reference, or a URL address or some other pointer to a source of information regarding that object.

The accuracy of the grid reference determined for the distant object is dependent upon the accuracy of the components comprising device 112. The limiting factor is most likely to be the GPS receiver 206. In many instances, the fact that the GPS position is accurate to only a few metres, or maybe even tens of metres, may not matter for determining the grid reference of the distant object. However, any error in the position of the device 112 as determined by the GPS receiver 206 may be particularly significant if there is a high density of objects of interest in the area. Microprocessor 228 may be configured to operate in accordance with an algorithm which creates an area, defined for example by a square having corners identified by grid references, in which the distant object may be positioned. Depending upon the density of landmarks, there may be more than one grid reference "hit" in the region defined by microprocessor 228, in database 302. In such an instance, a list or menu of information is downloaded to device 112.

In an alternative embodiment, microprocessor 228 may be configurable to provide for two readings of a distant object to be taken, and respective readings compared to determine a confidence level in the positional information. If the two readings are within predetermined limits with respect to each other then an average or aggregate reading may be established. Otherwise, the microprocessor 228 may reset the rangefinding process. Optionally, a reduced processing system may merely evaluate the average or aggregate reading. Such systems need not be limited to two readings but may provide for as many readings as is deemed appropriate or viable.

Preferably, the information column 308 of Table 304 is split into at least two columns 310 and 312, respectively relating to a name of the object, and a detailed description of that object. When more than one object falls within the grid reference area defined by microprocessor 228, then a list of names only are forwarded to device 112. A user of the device 112 may then select which of the names best correspond to the object that they have targeted, and the device 112 then requests the detailed information from the database 302 for that selected object. The information in column 308 may also include or be an image of the object(s) corresponding to the grid reference. Subsidiary information regarding the location of the distant object may also be included. For example, the existence and location of restaurants, shops or other landmarks in the vicinity of the object of interest may also be included in column 808. This may provide for revenue from sponsorship or advertising. Additionally, travel information or directions may be provided to direct a user from their location i.e. position of device 112, to the distant object. For example, street directions or a street address may be provided for the distant object. A map may be downloaded having the user's position and distant object position indicated on it.

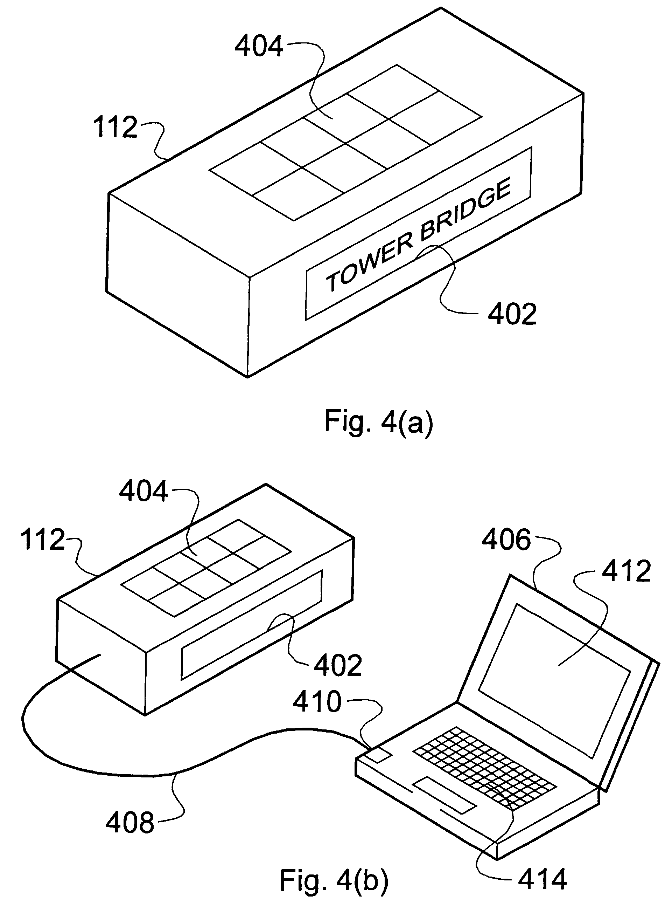

In a first example as illustrated in Figure 4A, the device 112 is a stand-alone device and comprises a display 402 for displaying name information regarding an object, and a control panel such as a keypad 404 for controlling operation of the device. Optionally, the device may be controllable using voice recognition or a combination of voice and keypad control.

Optionally, the device 112 may be linked to a computing device 406 such as a laptop, or palmtop computer or Personal Digital Assistant, via a suitable link 408 into a modem 410. Advantageously, the computing device 406 provides enhanced functionality in connection with the device 112. For example, if the Table 304 of database 302 comprises one or more Uniform Resource Locators (URLs) corresponding to a grid reference, then the URL may be downloaded via device 112 to the computing device 406. The URL(s) may be displayed on screen 412 and selected or modified by user input at keyboard 414. The user may use the URL to connect the computing device 406 to a website corresponding to that URL and containing information regarding the distant object. Additionally, use of the computing device 406 may assist in implementing voice or speech control of device 12.

Optionally, database 302 comprises information about public transport. In a particular example, a bus fleet has its vehicles fitted with a GPS receiver which determines the location of each vehicle. In addition, each vehicle has a transmitter which is linked to a central control station, and forwards the location of each vehicle to that central control station. Thus, a fleet controller knows the location of each of their vehicles, referred to a map grid reference determined by the GPS system. Referring now to Figure 3, the database 304 may be configured to represent information about each vehicle in the fleet. For such a system, the grid reference system would be periodically updated as the vehicles move. Information regarding the vehicle would be included in column 308 on a row corresponding to the vehicle's current grid reference. Suitably, the information column 308 is split into two columns as before, i.e. column 310 and 312, but in this instance, column 310 would contain the number of the bus, and column 312 would describe the route, next stop or stops and fare, for example, for that particular bus. A user may point device 112 at a bus and, once the grid reference is determined, the grid reference may be forwarded to the database 302 in order to identify which bus the device 112 is directed towards. Information regarding that bus may then be forwarded to device 112.

Device 112 need not communicate with a remote database 302, but may include a memory, for example memory 230 of control circuitry 208, having information regarding grid references stored on it. Such a system would be suitable if the device 112 was available for hire by tourists visiting a particular city. In such a situation, the memory device 230 would be loaded with grid references and associated information relating to a particular city. Updating of information could be achieved on a regular basis by merely downloading information into the memory 230. Optionally, memory cartridges, for example flash memory cartridges, may be loadable into the device 112. Each memory cartridge may relate to a particular city, area or type of information. Additionally, memory cartridges having information in different natural languages for each area etc. may be provided.

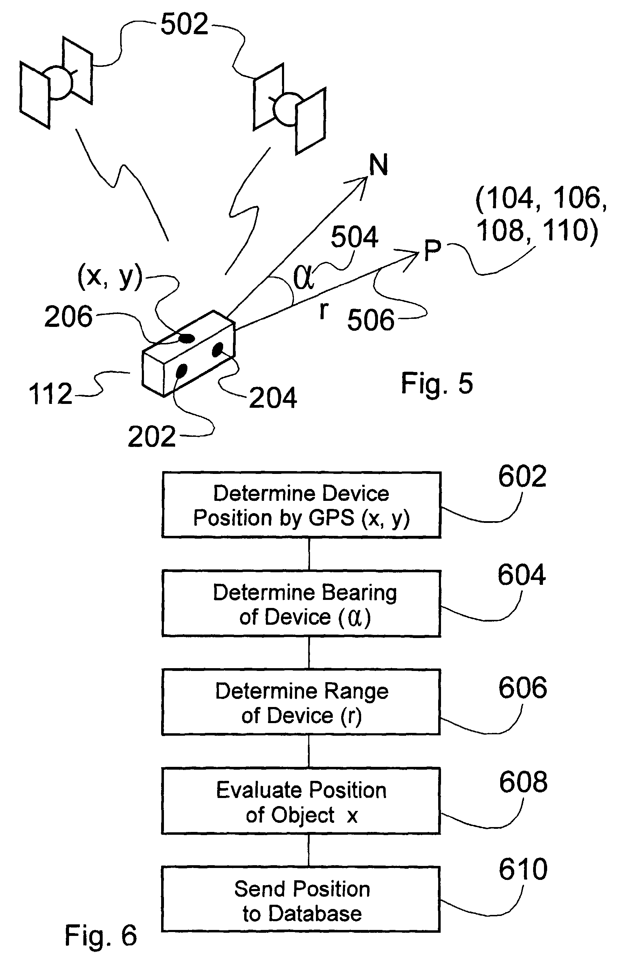

An example of a method of controlling the microprocessor 228 to evaluate a grid reference will now be described with reference to Figures 5 and 6 of the drawings.

Figure 5 schematically illustrates a device 112 comprising a range-finder 202, electronic compass 204 and GPS receiver 206 communicating with a GPS constellation of satellites 502. The GPS system determines the position of the device 112 to be x,y. The range-finder 202 determines the distance 506 between the device 112 and the distant object P to be r, and the electronic compass 204 determines the bearing 504 of the distant object P to be $\alpha$ relative to North (N).

If the co-ordinates of the device 112, x, y, are within a rectangular co-ordinate system where the y co-ordinate is aligned to the North/South direction, and the x co-ordinate is aligned along the East/West direction, then the position P of the distant object is given by the following relationship:

$$P = x + r\sin\alpha, y + r\cos\alpha.$$

A suitable algorithm for controlling microprocessor 228 to determine the position of the distant object P relative to device 112 will now be described with reference to the flowchart illustrated in Figure 6 of the drawings. At step 602, the position of device 112 (x,y) is determined by use of the GPS system. The microprocessor 228 then receives a measurement of the bearing of the distant object P from the device 112 at step 604, and at step 606 the microprocessor 228 receives electronic signals representing the distance of the distant object from the device 112. At step 608, the microprocessor 228 is configured to evaluate the equation $P = x + r\sin\alpha, y + r\cos\alpha$, in order to evaluate the position of object P in absolute terms within the co-ordinate reference system. Next, step 610, the co-ordinates of distant object P 302 or memory 230 for comparison with entries in a table stored therein to derive relevant information at objects stored at the corresponding grid references.

As mentioned earlier, depending upon the accuracy of the GPS system 206, and other systems such as the ranging system 202 and electronic compass 204, it may be necessary to define an area within the co-ordinate system as opposed to a particular grid reference. In such circumstances, step 608 of the flowchart illustrated in Figure 6 may be adapted to define an area

$$\Delta P = x+(r+\Delta/2)\sin\alpha,\ y+(r-\Delta/2)\cos\alpha,\ x+(r+\Delta/2)\cos\alpha,\ y+(r+\Delta/2)\cos\alpha,$$

$$x+(r-\Delta/2)\sin\alpha,\ y+(r+\Delta)\cos\alpha,\ x+(r-\Delta/2)\sin\alpha,\ y+(r-\Delta/2)\cos\alpha,$$

thereby defining an area within which the object may reside, where $\Delta/2$ is an estimated or predetermined error in the range r. Such an algorithm would also take into account any error in bearing $\alpha$. Optionally, an estimated or predetermined error may be included in bearing $\alpha$ and utilised instead of, or as well as, the estimated error in r.

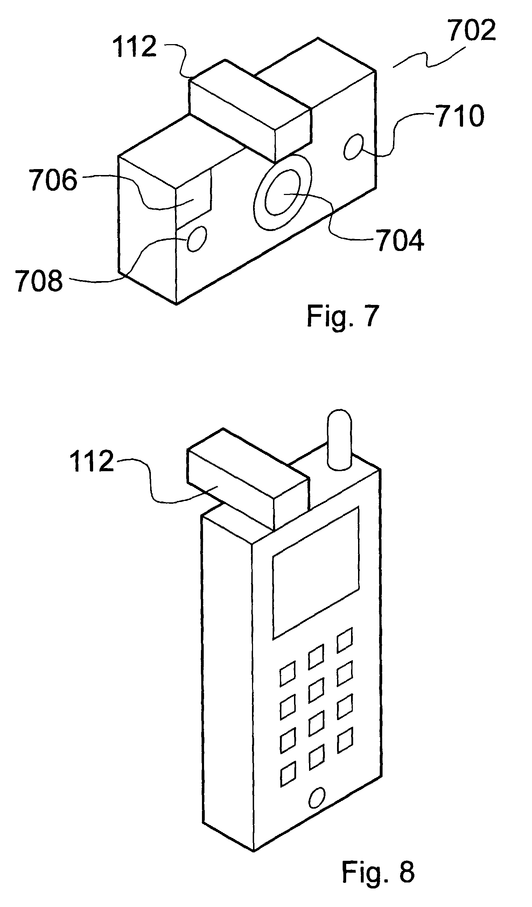

In a second embodiment, apparatus in accordance with an aspect of the invention may be integrally formed with an autofocusing camera 702, schematically illustrated in Figure 7. The device, 112, may be mounted on a camera 702, or may be formed within the housing of the camera 702. Preferably, the device 112 does not include the range finding system as described with reference to Figure 2, but utilises the range finding system of the autofocus apparatus of camera 702. Automatic range finding and focusing apparatus suitable for cameras is described in United States Patent No 4 065 778. A particularly useful system described in US 4 065 778 will now briefly be described by way of example.

Autofocusing camera 702, illustrated in Figure 7, comprises an objective lens 704 which is movable along a predetermined path in order to focus an image onto an image plane within the camera 702. Additionally, camera 702 includes a viewfinder 706, and lenses 708 and 710 which are associated with the automatic focusing and range finding apparatus incorporated in the camera.

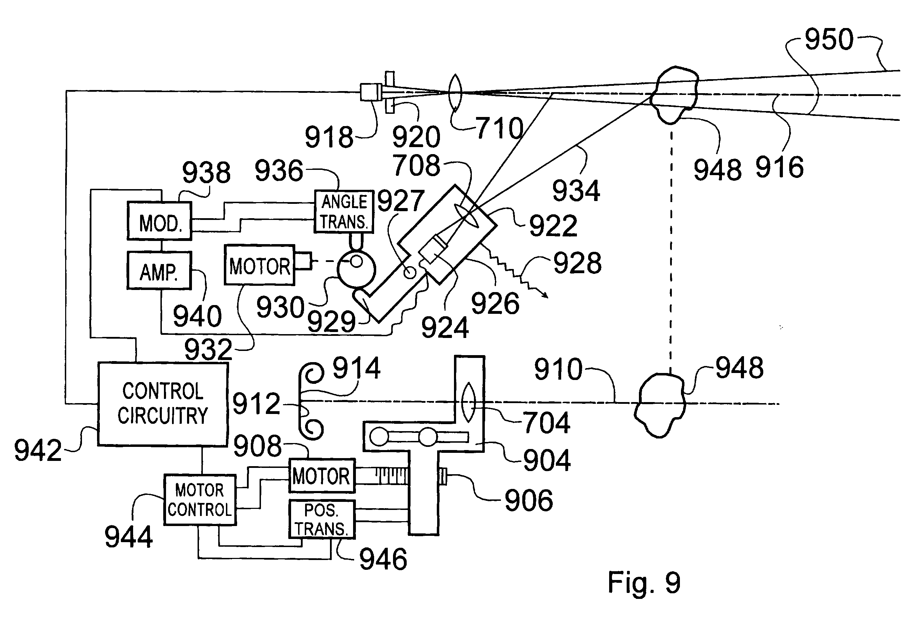

The automatic range finding and focusing apparatus will now be described with reference to Figure 9. Within camera 702, the objective lens 704, is supported by a slide 904. The slide 904 is adapted to be moved by a threaded shaft 906 of motor 908. Motor 908 is reversible and can adjust lens 704 along optical axis 910 in order to focus an image of object 948 on a focal plane 912 of a photographic film 914.

The photodetector lens 710 is mounted with its optical axis 916 substantially parallel to the axis 910 of the objective lens 704, and is adapted to focus light onto the photosensitive face of a photodetector 918. The aperture plate 920 limits the effective area of the photodetector 918 such that the photodetector 918 has a relatively narrow field of view as shown by boundary lines 950.

For clarity of illustration, the object 948 is shown in two positions, namely along the objective lens axis 910 and also along the axis 916 of the photodetector lens 710. However, it will be understood that in reality the object would be much larger in proportion to the camera and would intercept both lens axes at substantially the same distance from the camera 702. The emitter lens 708 forms a part of an emitter unit 922, also comprising a light source 924, which together with the emitter lens 708, is carried on a support plate 926, which is reciprocably rotatable about a pivot pin 927. A cam follower 929 extending from the support plate 926 is urged by a spring 928 into contact with the periphery of a cam 930 which is mounted to the shaft of motor 932. In operation, the motor 932 rotates the cam 930, thereby reciprocating the light emitter unit 922, such that its emitted light beam 934 sweeps back and forth along the optical axis 916 of photodetector 918. In the example illustrated in Figure 9, the light beam 934 is shown intersecting the optical axis 916 of the photodetector 918 at the closest point to the camera 702 at which the range finder is designed to function. When the cam 930 has rotated through 180°, the light beam 934 intersects the photodetector axis 916 at the farthest operable distance from the camera for the range finding apparatus.

An angle transducer device 936 is operably coupled to cam 930 in order to monitor the angular position of the light emitter unit 922, and to cause the modulating unit 938 to superimpose a modulation frequency functionally related to the angular position of light emitting unit 922 on the light emitted from emitter 924. The output of the modulation unit 938 is forwarded to an amplifier 940 which is coupled to the light emitter 924 in order to provide signals of sufficient strength to effect modulation of light output from the emitter 924. The modulation unit 938 is also coupled to control circuitry 942 which provides suitable control signals to complement the signals provided by the angular transducer device 936.

The angular position of the light emitter unit 922 determines the distance from the camera at which the emitted light beam 934 intersects the photodetector axis 916. Light incident on the photodetector 918 is a part of light beam 934 reflected from object 948. Thus, the modulation signal superimposed on the light beam 934, which is related to the angular position of the light emitter unit 922, can be decoded to determine the distance of the object 948 from the camera 702. This is achieved by the output of photodetector 918, the photodetector being operably sensitive to the modulation of the light beam 934, being detected by control circuitry 942 to determine the modulation signal superimposed on the light beam 934, and thereby to determine the distance of the object 948 from the camera. Control circuitry 942 may be discrete logic circuitry, a microprocessor, or a combination of discrete logic and microprocessor. The control circuitry 942 provides a distance indicating output signal to a motor control circuit 944 which controls motor 908 in order to position the objective lens 704 in accordance with the measured object distance. Additionally, the motor control circuitry 944 receives an input from a lens position information transducer 946 in order to monitor the position of the object lens 704.

Optionally, the autofocusing apparatus may comprise more than one light emitter, each operable at a different modulation frequency or signal and directed to respective zones of the detector axis 916. Thus, reception by photodetector 918 of a signal of, or predominantly being of, one or other modulation characteristic will determine the zone of the axis 916 in which the object 948 resides. The control circuitry 142 outputs a signal representative of the distance and the object lens 704 may then be moved to a position to correspond to the zone in which the object 948 has been detected. Further optionally, the light emitter units may comprise light emitters having respective modulation characteristics, and directed such that their respective output beams partially overlap. Thus, zones of the access 916 may be defined in terms of discrete modulation characteristics of reflected light received by photodetector 918, and reflected light comprising a combination of modulation characteristics. Thus, the modulation characteristics as detected by photodetector 918 may be decoded in control circuitry 912 to provide an indication of the zone in which object 948 resides, thereby providing sufficient information to move lens 704 to an appropriate position forming an image 912 of photographic film 914.

The positional information derived by control circuitry 942 from the received modulated signal of photodetector 918 and used to control the motor control unit 944, may be utilised by device 112 in order to determine the range of a distant object from the camera 702 and utilise that information with the other information determined by the components of device 112 to determine the position of a distant object relative to the device 112.

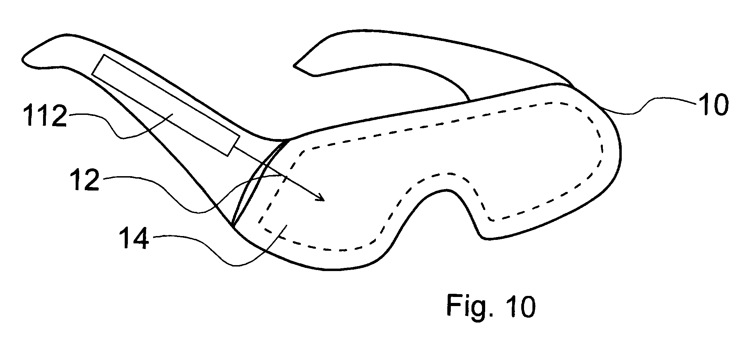

An embodiment of the invention may comprise goggles or eyeglasses 10 as illustrated in Figure 10 which a user wears and merely looks at the object of interest. Location determining device 11 associated or integral with the goggles and having a range finder aligned with the viewing direction 12 of the goggles, and including a GPS receiver, magnetic compass, control circuitry and optionally a communications unit, derives the location of a viewed object. Information regarding or relating to the viewed object may then be displayed on miniature LCD displays 14 formed in the eyeglasses and within the user's field of vision.

Such an embodiment would preferably utilise speech control, or a reduced keystroke instruction sequence for controlling operation of the eyeglasses.

Components of the location finding system may be arranged along the earpieces of the eyeglasses.

Suitable displays for eyeglasses may be of the type supplied by MicroOptical Corporation and disclosed at "http://www.microopticalcorp.com/eyefaq.html".

Although embodiments in accordance with the invention have been described in detail with reference to the Figures, it will be appreciated that various modifications may be made within the scope of the invention. For example, the device 112 may be integrally formed with a mobile telephone as illustrated in Figure 8. Optionally, device 112 need not have a communications unit 210, but may be linked to a radio-telephone, for example, and utilise the cellular transceiver within the radio-telephone in order to make contact with the database 302. A particularly suitable embodiment would be a multimedia device, such as the Nokia™ communicator. An embodiment utilising a wireless transceiver such as a cellular telephone transceiver may advantageously utilise triangulation of signals received from wireless/ cellular base stations to determine the location of device 112. Thus, a GPS system would not need to be utilised. Other suitable location determining devices may also be used.

The embodiments are described above with reference to the term "light", however it should be understood that the term "light" as used above includes those types of radiation beyond the normal visible range of the electromagnetic radiation spectrum such as infrared or ultraviolet light.

The information contained in database 302 or memory 230 need not be limited to landmarks, for example, but may also include information linked to theatres or concert halls, for example. The information corresponding to the relevant grid reference could then be a schedule of shows and concerts, including ticket prices for the theatre or concert hall or any other information relevant to the position or area of the distant object. The information may be interactive in that on-line booking or purchasing of tickets may be possible.

Embodiments in accordance with the invention provide a flexible and convenient way of identifying and finding out about landmarks, without the need to carry around guidebooks or maps. Additionally, material which requires regular updating, such as theatre or concert hall schedules, may also be provided in a convenient and flexible fashion.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

## Claims

1. Apparatus for determining a location of a remote object, comprising:

   means for determining a location of said apparatus,
   means for determining the relative position of an object remote from said apparatus with respect to said apparatus; and
   means for calculating the location of said object from a knowledge of the relative position of said object to said apparatus.

2. Apparatus according to Claim 1, wherein said means for determining the relative position of said object includes;

   range-finding means for determining the distance of said object from said apparatus;
   bearing means for determining a bearing of said object relative to said apparatus; and
   position calculation means for determining the relative position of said object to said apparatus in accordance with said distance and bearing, respectively determined by said range-finding means and said bearing means.

3. Apparatus according to Claim 2, said location calculation means operable for determining the location of said object from a knowledge of the location of said apparatus and said relative position of said object.

4. Apparatus according to any preceding Claim, operable to determine said location with reference to a coordinate system.

5. Apparatus according to Claim 4, operable for said co-ordinate system being a substantially Cartesian co-ordinate system.

6. Apparatus according to Claim 4 or 5, wherein said location calculating means comprises a microprocessor configurable to determine the location of said object in said co-ordinate system in accordance with the relationship $X = x + r\cos\alpha$, $Y = y + r\sin\alpha$, where X and Y represent the co-ordinates of said object, x and y represent the co-ordinates of the apparatus, r represents the distance determined by the range finding means and a represents the bearing determined by the bearing means.

7. Apparatus according to any one of Claims 4 to 6, wherein the co-ordinate system is a map grid reference system.

8.  Apparatus according to any one of Claims 4 to 6, wherein the co-ordinate system is a latitude and longitude system.

9.  Apparatus according to any preceding Claim, wherein said means for determining the location of said apparatus comprises a wireless receiver for receiving one or more signals from which the location of said apparatus may be derived

10. Apparatus according to Claim 9, wherein said wireless receiver comprises a receiver part of a GPS system, and said at least one signal comprises GPS satellite signals.

11. Apparatus according to any one of Claims 2 to 10, wherein said range-finding means comprises:

    light transmitting means;
    light receiving means; and
    means for determining the time of flight for a transmitted beam to be reflected from said object and received in the light receiving means.

12. Apparatus according to Claim 11, wherein said light transmitting beam is adapted to transmit a pulse of light and said light receiving means is adapted to receive said pulse of light, said time of flight evaluation means being operable to determine the time of flight for said pulse transmitted to and reflected from said object, and received by said range finding means.

13. Apparatus according to Claim 11 or 12, wherein said light comprises laser light.

14. Apparatus according to any one of Claims 2 to 10, said range finding means comprising a range finding system for an autofocus camera.

15. Apparatus according to Claim 14, said range finding means being integral with said autofocus camera.

16. Apparatus according to Claim 14 or 15, wherein said camera is a video camera.

17. Apparatus according to any one of Claims 2 to 16, wherein said bearing means comprises an electronic compass providing at least an azimuthal bearing.

18. Apparatus according to Claim 17, wherein said electronic compass provides means for determining elevation relative to a reference surface.

19. Apparatus according to Claim 18, wherein said reference surface is a surface of the earth.

20. A system for obtaining information associated with an object, comprising apparatus according to any preceding Claim, the system further comprising:
    storage means for storing one or more electronic signals representative of a location, and information relating to said location.

21. A system according to claim 20, said information relating to an object at or proximal to said location.

22. A system according to claim 20 or 21, further comprising display means for displaying information associated with a stored location in said storage means and corresponding to a location calculated for said object.

23. A system according to any one of claims 20 to 22, wherein said storage means is integral with said apparatus.

24. A system according to Claim 23, wherein said storage means comprises a semiconductor memory or a magnetic medium memory or optical medium memory.

25. A system according to claim 24, wherein said semiconductor memory comprises a flash memory module.

26. A system according to Claim 16 or 17, further comprising wireless communications means and wherein said storage means is disposed remote from said apparatus and linkable via a wireless communications channel.

**27.** A system according to Claim 26, wherein said wireless communication means is operable to communicate the location of said object to said remote storage means, and to receive information corresponding to said location.

**28.** A system according to any one of Claims 20 to 27, comprising a display integrally formed with said apparatus for displaying said information.

**29.** A system according to Claim 28, wherein said display comprises a liquid crystal display.

**30.** A system according to any one of Claims 20 to 29, further comprising computer means operably linkable to said apparatus, said computer means comprising a display screen for displaying information thereon.

**31.** A system according to Claim 30, wherein said information comprises a Uniform Resource Locator, said computer configurable to access an Internet site corresponding to said URL.

**32.** A system according to any of Claims 20 to 31, further comprising a cellular telephone.

**33.** A system according to Claim 32, wherein said wireless communication device comprises a cellular transceiver of said cellular telephone.

**34.** A system according to claim 32 or 33, wherein said cellular telephone is integrally formed with said apparatus.

**35.** A system according to any one of claims 20 to 34, comprising eyeglasses wearable by a user, wherein said range finding means is integrally formed with said eyeglasses and adapted to determine a range in the same direction as the viewing direction of a wearer of said eyeglasses.

**36.** A system according to claim 35, comprising a miniature display in an eyepiece of said eyeglasses.

**37.** A method for determining a location of an object, comprising:

defining a reference point;
determining the range of said object from said reference point;
determining a bearing of said object relative to said reference point;
calculating the location of said object from knowledge of said reference point location, said range and said bearing.

**38.** A method according to claim 37, operable to determine said location with reference to a coordinate system.

**39.** A method according to claim 37 or 38, wherein said step of calculating comprises first calculating the relative position of said object to said reference point in accordance with said range and bearing.

**40.** A method according to any one of claims 37 to 39, said step of calculating comprising determining the location of said object in accordance with the relationship

$$X = x + r\cos\alpha, \quad Y = y + r\sin\alpha,$$

where X and Y represent the co-ordinates of said object, x and y represent the co-ordinates of reference point, r represents the range of said object from said reference point and a represents an azimuthal bearing.

**41.** A method according to any one of claims 37 to 40, further comprising:

comparing said location with one or more locations stored in a memory means; and
retrieving from said memory information associated with said location correlating with a one of said one or more locations.

**42.** A method according to claim 41, said information associated with said object for said location.

Fig. 1

EP 1 059 510 A1

Fig. 2

110

210 — COMM.S

GPS 206

220

202

214

LASER

212

224

226

218

216

222

226

LASER

228 — μP    MEM

208    230

ELECTRONIC COMPASS

204

404

DISPLAY

402

EP 1 059 510 A1

13

114

302

112

Fig. 3(a)

306

308

| Grid Ref | Info | |
|---|---|---|
| | Name | Description |
| | 310 | 312 |
| | | |

304

Fig. 3(b)

404

112

TOWER BRIDGE

402

Fig. 4(a)

404

112

406

412

402

410

408

414

Fig. 4(b)

502

N

504

(104, 106, 108, 110)

P

α

(x, y)

206

r

506

112

202

204

**Fig. 5**

| | |
|---|---|
| Determine Device Position by GPS (x, y) | 602 |
| Determine Bearing of Device (α) | 604 |
| Determine Range of Device (r) | 606 |
| Evaluate Position of Object  x | 608 |
| Send Position to Database | 610 |

**Fig. 6**

112    702

706    710

708    704

Fig. 7

112

Fig. 8

Fig. 9

Fig. 10

EP 1 059 510 A1

| | European Patent Office | **EUROPEAN SEARCH REPORT** | Application Number EP 99 40 1446 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 95 07526 A (CRITICOM CORP ;ELLENBY JOHN (US); ELLENBY THOMAS W (US)) 16 March 1995 (1995-03-16)<br><br>* the whole document * | 1-3, 9-17, 20-24, 26-29, 35-42 | G01C21/20 |
| X | US 5 825 480 A (UDAGAWA TETSUO) 20 October 1998 (1998-10-20)<br><br>* the whole document * | 1-10, 17-19, 37-39 | |
| A | DE 298 12 591 U (CREATIV PRODUCT ELEKTRO UND FE) 22 October 1998 (1998-10-22) * claims * | 32-34 | |
| A | DE 197 48 372 A (EASTMAN KODAK CO) 6 May 1999 (1999-05-06) * abstract; figures * | 1 | |
| A | US 5 579 165 A (MICHEL CLAUDE  ET AL) 26 November 1996 (1996-11-26) * abstract * | 1 | **TECHNICAL FIELDS SEARCHED (Int.Cl.7)**<br><br>G01C |
| A | GB 2 298 539 A (DEEHAN RICHARD) 4 September 1996 (1996-09-04) * abstract * | 1 | |

The present search report has been drawn up for all claims

| Place of search | Date of completion of the search | Examiner |
|---|---|---|
| THE HAGUE | 14 December 1999 | Hoekstra, F |

EPO FORM 1503 03.82 (P04C01)

**ANNEX TO THE EUROPEAN SEARCH REPORT
ON EUROPEAN PATENT APPLICATION NO.**

EP 99 40 1446

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-1999

| Patent document cited in search report | | Publication date | Patent family member(s) | | Publication date |
|---|---|---|---|---|---|
| WO 9507526 | A | 16-03-1995 | US 5815411 A | | 29-09-1998 |
| | | | AU 691508 B | | 21-05-1998 |
| | | | AU 7314694 A | | 27-03-1995 |
| | | | CA 2171314 A | | 16-03-1995 |
| | | | EP 0722601 A | | 24-07-1996 |
| | | | JP 9505138 T | | 20-05-1997 |
| | | | NZ 269318 A | | 19-12-1997 |
| | | | US 5742521 A | | 21-04-1998 |
| | | | US 5682332 A | | 28-10-1997 |
| US 5825480 | A | 20-10-1998 | JP 9210686 A | | 12-08-1997 |
| DE 29812591 | U | 22-10-1998 | NONE | | |
| DE 19748372 | A | 06-05-1999 | NONE | | |
| US 5579165 | A | 26-11-1996 | FR 2683330 A | | 07-05-1993 |
| | | | DE 69221700 D | | 25-09-1997 |
| | | | DE 69221700 T | | 29-01-1998 |
| | | | EP 0540393 A | | 05-05-1993 |
| GB 2298539 | A | 04-09-1996 | NONE | | |

EPO FORM P0459

For more details about this annex : see Official Journal of the European Patent Office, No. 12/82